Europäisches Patentamt

European Patent Office

Office européen des brevets

(11) Publication number: **0 392 747**
**A1**

(12) # EUROPEAN PATENT APPLICATION

(21) Application number: **90303689.5**

(51) Int. Cl.⁵: **B60T 17/22, F16D 65/72**

(22) Date of filing: **06.04.90**

(30) Priority: **12.04.89 GB 8908255**

(43) Date of publication of application:
**17.10.90 Bulletin 90/42**

(84) Designated Contracting States:
**FR GB IT**

(71) Applicant: **LUCAS INDUSTRIES public limited company**
**Great King Street**
**Birmingham, B19 2XF West Midlands(GB)**

(72) Inventor: **Harrison, Anthony William**
**63 Middle Park Road**
**Birmingham, B29 4BH(GB)**

(74) Representative: **Waite, Anthony William et al**
**MARKS & CLERK Alpha Tower Suffolk Street Queensway**
**Birmingham B1 1TT(GB)**

(54) **Fluid displacement device.**

(57) A fluid displacement device (20) is provided to compensate for variations in the fluid volume requirements of a brake actuator. The device includes a piston (24) movable in a chamber (21) to displace fluid from the latter through an outlet (23) connected, in use, to the actuator. A motive device is provided in the form of a solenoid assembly (30, 31, 32) for displacing the piston under the influence of electronic control means and a uni-directional arrangement (37, 40, 41) prevents return movement of the piston following fluid displacing movement thereof.

FIG 2

EP 0 392 747 A1

This invention relates to a fluid displacement device for use with an hydraulic brake actuator of the general kind in which a friction element is movable by hydraulic actuating means into braking engagement with a rotary braking member.

When it is required to actuate such a brake hydraulically in both service and parking modes, it is essential that the hydraulic integrity of the hydraulic system should be as high as possible in order to avoid leakage during the parking mode, since even a small leak occurring over a prolonged period with the vehicle unattended could result in a reduction of the braking force which could lead to a potentially dangerous situation, particularly if the vehicle is parked on an incline. For this reason, the use of valves, such as those conventionally used for fluid recuperation purposes, and flexible hoses, is considered to introduce an unacceptable degree of risk in such a system.

It is, nevertheless, necessary in such actuators to compensate for variations in the fluid volume requirements resulting from friction lining wear and/or temperature variations and it is an object of the present invention to provide a fluid displacement device which can fulfil this purpose when used in association with a brake actuator.

According to the present invention, a fluid displacement device for use with a brake actuator comprises a housing defining a chamber in which a piston is movable to displace fluid from the chamber through an outlet connected, in use, to a brake actuator, motive means operable to drive the piston for effecting said fluid displacement to the actuator, and restraint means acting to prevent return movement of the piston following fluid displacing movement of the latter.

With such an arrangement incorporated in an hydraulic brake actuator, excessive movement of an actuator piston may be sensed to produce a responsive electrical signal which, when applied to the drive means, produces compensatory fluid displacement from said chamber.

In one convenient arrangement, the motive means is an electrical device having a rotatable armature which is coupled by screw means to said piston such that rotation of the armature in one direction causes linear fluid-displacing movement of the piston, said restraint means co-acting with a rotary part of a said screw device to prevent return movement of the piston.

The invention will now be described, by way of example, with reference to the accompanying drawings in which:-

Figure 1 is a perspective view, partly in cross-section, of one form of vehicle brake embodying the fluid displacement device of the invention;

Figure 2 is a side view, partly in longitudinal cross-section, of one form of the fluid displacement device of the invention;

Figure 3 is a view similar to Figure 2 of another form of the fluid displacement device of the invention;

Figure 4 is a view similar to Figure 2 of a further alternative fluid displacement device of the invention, and

Figure 5 is a diagram illustrating the operation of part of the mechanism of Figure 4.

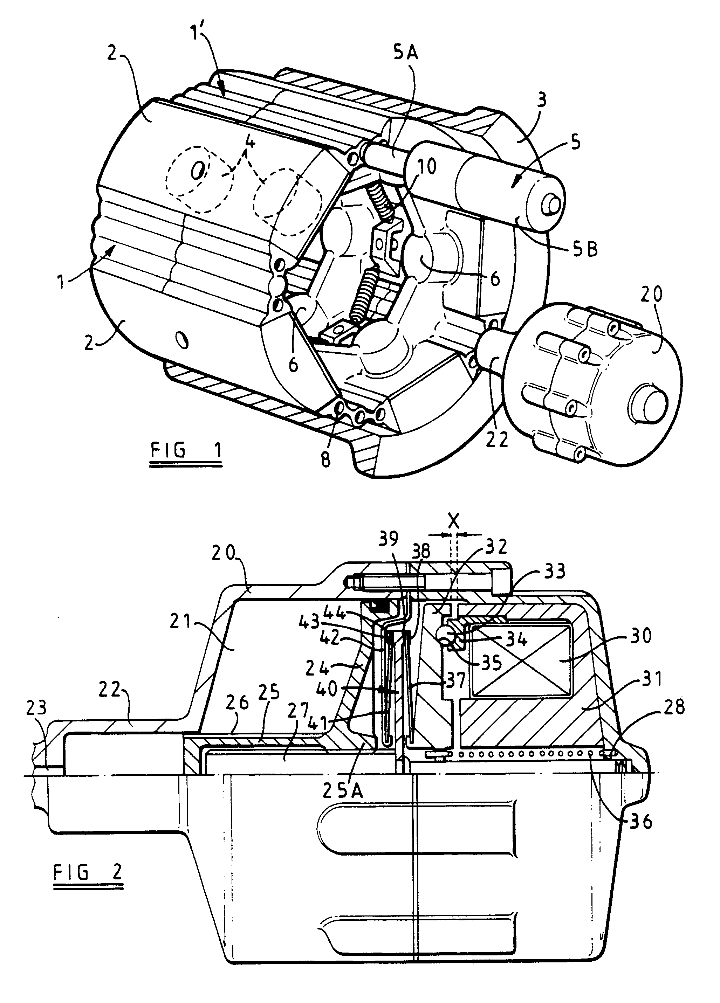

Referring to Figure 1 of the drawings, the brake shown therein is generally similar to that illustrated in Figures 1 to 3 of our co-pending European Patent Application No. 88310841.7. Briefly, this brake is in the form of an internal shoe drum brake unit having a relatively fixed generally annular body 1 around which are mounted a plurality of friction elements in the form of brake shoes 2, of which five are provided in the illustrated example. The shoes are equi-angularly distributed at 72° intervals around the body 1, adjacent shoes being separated by intervening portions 1 of the body against which the shoes bear in torque-reacting relationship.

The body 1 is disposed within a surrounding brake drum 3 against which the shoes 2 are urged into braking engagement by slave pistons 4, actuation of which is effected by an electro-hydraulic actuator mechanism 5. The pistons 4 are housed within respective cylinders 6 defined by and housed within the body 1, the cylinders being interconnected by fluid conduits 7 also defined by the body and connected via other internal conduits 8 to the actuator 5. A shoe return force is provided by a plurality of return springs 10. The actuator 5 includes a hollow cylindrical body portion 5A within which slides a piston element (not shown) for the purpose of pressurising the slave cylinders 6 in order to actuate the brake. The piston is driven by an electric drive device 5B, which would normally be an electrical stepper motor, conveniently of the switched reluctance type. The motor is operated under the control of an electronic controller in the manner fully described in our aforesaid European Patent Application No. 88310841.7. As the linings of the friction elements 2 wear away during actuation of the brake, it is necessary to supply an increasing volume of hydraulic fluid to the cylinder 6. If this were supplied from the actuator 5, the length of the latter required for necessary fluid capacity would be unacceptable and the brake therefore incorporates a fluid displacement device 20 to supply additional fluid to the actuator cylinders.

One form of fluid displacement device is illustrated in Figure 2. The casing 20 defines a chamber 21 filled, in use, with hydraulic fluid, the chamber communicating via a narrower neck portion 22 with a passage 23 which connects the chamber 21 with the cylinders 6 of the actuator (Figure 1). A piston 24 is movable within the chamber 21 and has a smaller diameter spigot portion 25 which supports and guides the piston by engagement with the interior of the neck 22, the spigot 25 being provided with longitudinal grooves 26 which maintain fluid communication between the chamber 21 and passage 23 for all operative positions of the piston. The piston is supported against the fluid pressure in the chamber 21 by a central externally threaded stud 27 on to which a portion 25A of the piston is screwed, the thread employed being non-reversible. The stud extends to the rear end of the casing 20 where it is supported by a journal bearing 28.

The casing contains a solenoid coil 30 wound upon a core member 31. An annular armature 32 surrounds the shaft 27 and is normally spaced by a distance X from the opposed forwardly facing surface of the core. A series of angularly spaced balls 33 is interposed between the armature 32 and a support member 34 secured to the core member 31, the balls being housed in circumferentially inclined pockets 35 in the armature 32 and the support member 34. A radially inward location of the armature 32 is connected to the casing 1 by way of a torsion spring 36 which normally holds the armature in a fixed rotational position against a convenient stop (not shown).

The armature 32 carries an annular spider spring 37, outwardly projecting fingers of which have their outermost end portions 38 shaped to engage axially facing ratchet teeth 39 on an annular radially extending plate 40 fixed to the stud 27. The fingers 37 are axially resilient, but circumferentially rigid so that the end portions 38 of the fingers are able to act as pawls. A similar spider spring 41 is fixed to a support plate 42 rigidly secured to the housing, the spider 41 having radially outermost portions 43 engaging ratchet teeth 44 on the opposite side of the plate 40 to the teeth 39.

The fluid displacement mechanism 20 is intended to operate when wear of the actuator friction linings produces a requirement for extra fluid within the slave cylinders 6. When this requirement is sensed, for example by sensing movement of the actuating piston within the main actuator 5 beyond a predetermined position, an electrical signal is sent to a main control unit (not shown) which causes the solenoid coil 30 to be energised so as to magnetise the core member 31 which attracts the armature 32, tending to close the gap X. When this happens, interaction between the balls 33 and pockets 35 causes the armature to rotate against the action of the spring 36 and thereby to move the pawl 38 of the spider 37 past at least one ratchet tooth on the plate 40. When the coil 30 is de-energised, the torsion spring causes the armature 32 to rotate in the reverse direction until it is arrested by contact with the aforesaid stop. This rotation is communicated by the spider 37 to the plate 40 which it drives together with the shaft 27, in such a direction as to move the piston 24 forwardly and expel fluid from the chamber 21 via the passage 23 to the actuator cylinders 6. Return movement of the shaft is precluded by the pawl 43 of the ratchet 41 co-acting with the ratchet teeth 44 of the plate 40. It will be understood that, by arranging the pawls and ratchets in an appropriate manner, it will be possible for the piston 24 to be driven upon rotation of the armature under the action of the coil 30, instead of rotation thereof by the spring 36.

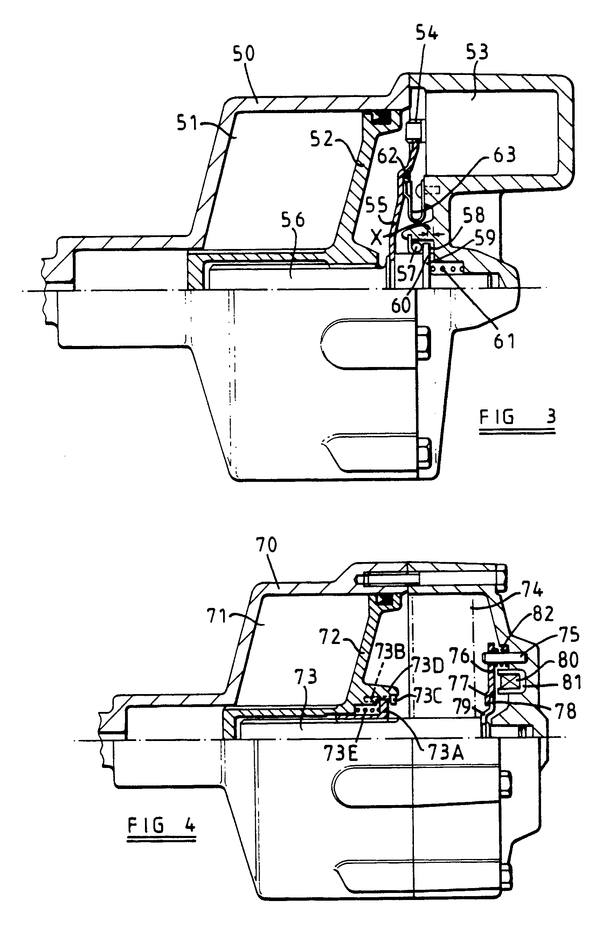

In the alternative embodiment of the fluid displacement device of the invention illustrated in Figure 3, the casing 50 defines a fluid chamber 51 containing a piston 52 to form an arrangement generally similar to that illustrated in Figure 2. However, in this embodiment an electric motor 53 replaces the solenoid of the previous embodiment and has an output pinion 54 which drives a toothed wheel 55 surrounding and fixed to a centre stud 56 with which the piston 52 is in threaded engagement, as previously. The stud is prevented from leftward movement by a thrust bearing 57, preferably of an anti-friction type, and against rightward movement by a rearward facing surface 58 of a flange 59 of the stud engaging an opposing surface 60 of the housing. A light spring 61 urges the stud 56 to the left to maintain a clearance X between the aforesaid surfaces.

The wheel 29 is provided with a set of angularly spaced depressions 62 which are arranged so as to be engaged successively by a clicker spring 63 fixed to the casing. The wheel 55 is thereby prevented from unwanted rotation due, for example, to vibration in use.

Rotation of the electric motor 53, upon sensing of an additional fluid requirement at the actuator cylinder 6, rotates the wheel 55 and attached shaft 56 in a direction such as to move the piston 52 forwardly in order to expel fluid from the chamber 51.

In order to cater for expansion of the fluid in the actuator cylinders 6, the spring 61 has a force which corresponds to a pressure less than a given threshold pressure, enabling differential expansion of the actuator fluid to move the piston 52 and stud 56 through part or all of the clearance X, which process is reversed as the fluid cools.

A further alternative fluid displacement device is illustrated in Figure 4. Again, a casing 70 defines a chamber 71 which contains a piston 72 threadedly connected to a stud 73, the arrangement of these components being generally similar to those in the previous embodiments. A spiral spring 74 reacts against the casing in such a manner as to urge the stud 73 rotationally in a direction to move the piston 72 to the left. The casing supports a number of axially extending pins 75 and these slidably support a plate 76 of which the inner periphery is provided with teeth 77 meshing with similar teeth 78 on a plate 79 rigidly secured to the stud 73. The meshing teeth 77, 78 effectively form an escapement which prevents the spring 74 from rotating the stud 73 in an uncontrolled manner. A solenoid coil 80 is contained within a ferro-magnetic annular channel 81 adjacent the plate 76 and arranged so that energising the coil attracts the plate 76 against the action of springs 82 so as to cycle the escapement 77, 78. Each such cycle releases the stud 73 for two increments of movement and it will be seen that unwinding of the spring 74 is thereby controlled to produce leftward movement of the piston 72 and consequent compensatory fluid flow from the chamber 71.

The stud 73 is threadedly engaged with a flanged nut 73A which is keyed against rotation by a pin 73B fixed in the piston 72. Axial movement of the nut 73A is limited by a ring 73C, such as a circlip, engaged in an axially projecting portion 73D of the piston. A spring 73E urges the piston 72 to the left relative to the nut 73A and stud 73. Spurious rotation of the stud 7 as a result of vibration, for example, is prevented by the escapement 77, 78.

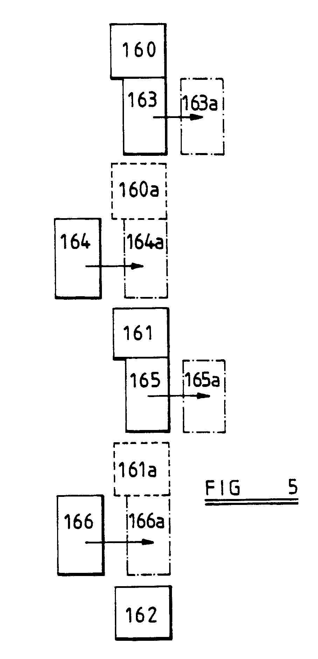

Figure 5 is a diagrammatic representation of the escapement 77, 78 and its manner of operation. Rectangles 160, 161, 162 represent individual ones of the teeth 78 on the periphery of the plate 79 and vertical movement along Figure 5 represents rotation of the plate 79. Rectangles 163, 164, 165 represent teeth on the plate 76 in their positions when the plate is attracted by the solenoid 80, 81. The same teeth are illustrated at 163a, 164a, 165a in their positions when the plate 76 is released by the solenoid 80, 81. The plate 79 is locked by the teeth against rotation until the plate 76 is moved to the right by energising the solenoid coil 80. It is then free to move one pitch, which is represented in Figure 5 by the tooth 160 moving to 160a, tooth 161 moving to 161a, etc. When the plate is released, as represented by the teeth 163, 164, 165 in their positions illustrated, the plate 79 can move one further pitch.

In order to prevent differential thermal expansion between the hydraulic fluid used and the structure of the device causing excessive variation in the fluid pressure when the brake is released, an external device such as a spring loaded diaphragm may be incorporated in the system in the manner described in our aforesaid co-pending European Patent Application No. 88310841.7. Alternatively, means for minimising the differential pressure effects may be incorporated in the device of the invention. Thus, the spring 61 in Figure 3 may be such as to correspond to a pressure less than the desired threshold pressure, so that differential thermal expansion of the fluid will move the piston 52 and stud 56 within the clearance X, instead of tending to create a vacuum in the system or exceeding the threshold pressure. In Figure 4, the spring 73E performs a similar function. Moreover, when the main actuator 1 is adjusted by the central controller in order to take up wear-generated clearance, the stud 56 of Figure 3 is able to float within the clearance X in the released condition of the brake. Correspondingly, in Figure 4, the nut 73A is able to float in the available axial clearance between itself and the piston 72.

In a further alternative arrangement, the springs 61 and 73E respectively in Figures 3 and 4 may be such as to provide protection solely against exceeding the threshold pressure and an anti-vacuum diaphragm device of the type referred to above could be used to prevent the formation of vacuum in the system. Such an arrangement would rely upon the adjusting function of the main actuator by the controller to control the pressure in the brake-released condition to less than that corresponding to the force of the aforesaid springs. The anti-vacuum device could conveniently be in the pressure zone of the brake itself or in the casing or in the main piston of the device of the invention.

A wind back provision for the friction elements, could be achieved in the embodiment of Figure 3 by reversing the motor under the control of the main controller. In figure 4, the stud 73 could be arranged to project to the right through a sealed aperture in the casing and be provided with a formation to be engaged by a suitable tool for manual rotation thereof. It would, in such a case, be necessary for the trailing edges of the teeth 77, 78 to be inclined so as to act as ratchet teeth permitting return rotation of the plate 79.

Means can also be provided for bleeding the system containing the device of the invention. In one example applicable to Figure 1, a permanent bleed screw may be located at a high point in the hydraulic system of the brake. When bleeding is required, a temporary reservoir containing a small amount of hydraulic fluid is fitted to the bleed screw, which is then opened. After removal of the brake friction elements, the pistons 4 are pushed back to their "new pad" positions, thereby displacing fluid and any air bubbles into the reservoir. The friction elements are then de-adjusted, drawing fluid from the reservoir back into the system. The bleed screw is then closed and the reservoir removed, following which new friction elements are fitted and the brake drum replaced.

It will be appreciated that, in all the embodiments of the device of the invention, it is preferable that the compensatory stroke of the fluid displacement piston occurs when the associated braking system is at low pressure.

This minimises the power required to drive the displacement device and, in normal use, the device only has to resist the high braking pressure, without performing significant displacement. It will be seen that the main actuator, when equipped with the displacement device of the invention, does not need to provide additional fluid volume to compensate for lining wear and can therefore have a much reduced axial dimension. In a modified arrangement, the fluid displacement piston may be arranged concentrically with the main actuator. It would also be possible to use the main actuator motor in place of the separate drive means described in the illustrated embodiments, the main motor being provided with a clutched connection for driving the fluid displacement piston.

**Claims**

1. A fluid displacement device (20) for use with a brake actuator (1), comprising a housing (20) defining a chamber (21) in which a piston (24) is movable to displace fluid from the chamber through an outlet (23) connected, in use, to said actuator, motive means (30-32) operable to drive the piston (24) for effecting said fluid displacement to the actuator (1), characterised by restraint means (43, 44) acting to prevent return movement of the piston (24) following fluid displacing movement of the latter.

2. A device according to Claim 1, characterised in that said motive means is an electrical device having a rotatable armature (32) which is coupled by screw means (25, 27) to said piston such that rotation of the armature in one direction causes linear fluid-displacing movement of the piston, said restraint means (43, 44) co-acting with a rotary part (27, 40) of said screw means to prevent return movement of the piston.

3. A device according to Claim 1, characterised in that said electrical device is a solenoid (30, 32) of which an armature (32) is linearly movable upon energisation of the solenoid, and means (33, 35) are provided to convert said linear movement into rotation of the armature (32).

4. A device according to Claim 3, characterised in that a face of the armature forms a ramp (35) cooperating with roller means (33) in such a manner as to convert linear movement of the armature into rotary movement thereof.

5. A device according to any one of Claims 2 to 4, characterised in that said rotary part of the screw device is a shaft (27) rotatably mounted in the housing (20) and carrying a part (44) of said restraint means which cooperates with another part (43) thereof fixed relative to the housing (20).

6. A device according to Claim 5, characterised in that said rotary part (40) of the screw device also carries part of a uni-directional drive means (38, 39) through which the armature (32) is rotationally coupled to said screw means for driving the latter in said one direction.

7. A device according to Claim 5 or Claim 6, characterised in that said shaft (27) has a generally radial flange (40) provided on each side thereof with respective series of teeth (39, 44) forming part of said restraint means at one side thereof and of said uni-directional device at the other side thereof.

8. A device according to Claim 2, characterised in that said motive means is a rotary electric motor (53) coupled by a gear connection (54, 55) to said screw means (56), said restraint means (62, 63) acting between the housing (50) and an element rotatable (55) with the screw means.

9. A device according to Claim 8, characterised in that the rotary part (56) of said screw means has a radially projecting part (55) provided with teeth which coact with a pinion (54) on a drive shaft of said motor (53) to form said gear connection.

10. A device according to Claim 2, characterised in that said electrical device is a solenoid (80, 81) of which an armature (76) is linearly movable upon energisation of the solenoid, the armature being connected to the screw means by way of an escapement mechanism (77, 78) which permits a torsion spring (74) to rotate the rotary part (73) of said screw means incrementally each time the solenoid is energised.

11. A device according to any one of Claims 2 to 10 wherein the piston (52, 72) is urged by spring means (61, 73E) in the direction of its fluid displacement movement, said spring means being arranged to yield in the event of thermal expansion of the fluid in said chamber (51, 71).

12. A brake actuator incorporating a fluid displacement device according to any one of Claims 1 to 10.

13. A brake actuator according to Claim 11 wherein an electric motor (5) operable to pressurise fluid for brake actuation also acts as said motive means of the fluid displacement device (20).

FIG 1

FIG 2

FIG 3

FIG 4

FIG 5

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | US-A-3 974 897 (W.L. PRINGLE)<br>* column 7, lines 13-61; figure 3 *<br>--- | 1 | B 60 T 17/22<br>F 16 D 65/72 |
| A | US-A-4 042 077 (R.H. MCCARTHY)<br>--- | | |
| D,P<br>A | EP-A-0 325 031 (LUCAS INDUSTRIES)<br>----- | | |

TECHNICAL FIELDS
SEARCHED (Int. Cl.5)

B 60 T
F 16 D

The present search report has been drawn up for all claims

| Place of search | Date of completion of the search | Examiner |
|---|---|---|
| BERLIN | 17-07-1990 | LUDWIG H J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)